# EUROPEAN PATENT APPLICATION

(11) **EP 4 339 751 A1**
(43) Date of publication of application: **20.03.2024**
(21) Application number: 22806762.5
(22) Date of filing: 10.05.2022
(51) Int. Cl.: G06F 3/044, G06F 3/041, G06F 3/0488

(54) **CAPACITIVE WHITEBOARD WRITING SYSTEM**

(30) Priority: 14.05.2021 CN 202110526587; 14.05.2021 CN 202121032469 U; 14.05.2021 CN 202121032502 U; 04.07.2021 CN 202121502835 U
(71) Applicant: Shenzhen Free Interactive Technology Co., Ltd, Shenzhen, Guangdong 518108 (CN)
(72) Inventor: DENG, Hai, Shenzhen, Guangdong 518108 (CN)
(74) Representative: Cabinet Chaillot
(86) International application number: PCT/CN2022/092039
(87) International publication number: WO 2022/237799

(57) **Abstract**

The present invention discloses a capacitive whiteboard writing system, and relates to the field of capacitive whiteboard technology to resolve the technical issue of function monotonousness for existing capacitive whiteboard writing systems. The present invention includes an electrically-conducting capacitive whiteboard writing implement, a capacitive whiteboard writing apparatus, and an electrically-conducting intelligent board eraser. The capacitive whiteboard writing implement is operable to make writing on the capacitive whiteboard writing apparatus and to put down an ink trace of various colors. The capacitive whiteboard writing apparatus is operable to display, in a real-time manner, the ink trace of various colors put down by the capacitive whiteboard writing implement and to perform recognizing, processing, displaying, and/or storing of digital-coordinate writing corresponding to the ink trace. The intelligent board eraser is operable to erase the ink trace of various colors on the capacitive whiteboard writing apparatus and to allow the capacitive whiteboard writing apparatus to recognize digital-coordinate writing and to simultaneously erase the digital-coordinate writing. The capacitive whiteboard writing system of the present invention provides full functionality, shows excellent utilization and good users' experience, and has a relatively wide market and value of application.

## Description

### FIELD OF THE INVENTION

The present invention relates to the field of capacitive whiteboard technology, and more particularly to a capacitive whiteboard writing system.

### DESCRIPTION OF THE RELATED ART

Writing markings of different colors on a white board with writing implements of various colors and displaying the writing contents and simultaneously wiping out previously written color markings are implementable with a writing system commonly available in the market. With the fast development of intelligent classrooms, writing and displaying on a whiteboard is gradually taking the place of the traditional way of writing with chalk and is becoming prevailing among teachers.

A known capacitive whiteboard can recognize digital coordinates of writing markings written on the capacitive whiteboard with a capacitive writing implement. However, an ordinary capacitive writing implement cannot be used to make writing with inks on a capacitive whiteboard with inks, and an ordinary whiteboard cannot recognize digital coordinates of writing markings. Further, the digital-coordinate writing markings put down on the capacitive whiteboard cannot be erased or wiped out by using an ordinary chalkboard eraser. Consequently, defects that the functionality of the capacitive whiteboard is monotonous and users' experience is poor may result. It is desired to provide a capacitive whiteboard writing system that allows writing to be made on a whiteboard with inks of various colors and also enables recognition, processing, displaying, and erasing of digital-coordinate writing markings, and also combines functions, such as control touch screen, in one single arrangement, to fill up the market gap.

### SUMMARY OF THE INVENTION

The objective of the present invention is to provide a capacitive whiteboard writing system in order to overcome the technical issue of the prior art capacitive whiteboard writing systems with respect to monotonous functionality. Among the various technical solutions provided in the present invention, a preferred technical solution provides various technical effects, which will be described in detail as follows.

To fulfill the above objective, the present invention provides the following technical solution:
The present invention provides a capacitive whiteboard writing system, which comprises an electrically-conducting capacitive whiteboard writing implement, a capacitive whiteboard writing apparatus, and an electrically-conducting intelligent board eraser; the capacitive whiteboard writing implement being operable to make writing on the capacitive whiteboard writing apparatus and to put down an ink trace of various colors; the capacitive whiteboard writing apparatus being operable to display, in a real-time manner, the ink trace of various colors put down by the capacitive whiteboard writing implement, and to carry out recognizing, processing, displaying, and/or storing of digital-coordinate writing corresponding to the ink trace; the intelligent board eraser being operable to contact with and move on the capacitive whiteboard writing apparatus to carry out erasing of the ink trace of various colors on the capacitive whiteboard writing apparatus and to allow the capacitive whiteboard apparatus to recognize the digital-coordinate writing to simultaneously erase the digital-coordinate writing.

Preferably, the capacitive whiteboard writing implement comprises an electrically-conducting writing-implement housing, a writing-implement core, and electrically-conducting writing liquid; the writing-implement core is fit to one end of the electrically-conducting writing-implement housing; the writing liquid is stored in a space formed by the electrically-conducting writing-implement housing and the writing-implement core; the electrically-conducting writing-implement housing and the writing-implement core are electrically connected with each other through the writing liquid so as to form an integral electrically conductive body.

Preferably, an inside surface of the electrically-conducting writing-implement housing, a portion of the electrically-conducting writing-implement housing in contact engagement with the writing-implement core, and an outside surface of the electrically-conducting writing-implement housing are all covered with an electrically-conducting material; the outside surface of the electrically-conducting writing-implement housing is provided with electrically-conducting screen printing or electrically-conducting labeling for enhancing an electrical conduction property of the electrically-conducting writing-implement housing.

Preferably, the electrically-conducting writing-implement housing comprises an electrically-conducting plastic material, metal, or alloy; or alternatively, the electrically-conducting writing-implement housing comprises a non-electrically conductive material and has an inside surface, a portion in contact engagement with the writing-implement core, and an outside surface that are all covered with an electrically-conducting material, and the inside surface and the outside surface of the electrically-conducting writing-implement housing are in electrical connection with each other to form a combined electrically conducting body.

Preferably, the intelligent board eraser comprises an eraser housing, and an erasing block having at least a portion disposed in the eraser housing; the eraser housing is in electrical connection with the erasing block; the eraser housing and the erasing block are both electrically conducting bodies; he erasing block is further in close connection with the eraser housing.

Preferably, the erasing block comprises abrasion/wear-durable electrically-conducting sponge, abrasion/wear-durable electrically-conducting fabric, or abrasion/wear-durable electrically-conducting cotton.

Preferably, a display device and a control device are further included; the control device is in communication connection with the capacitive whiteboard writing apparatus and the display device, and the communication connection comprises wired communication connection and/or wireless communication connection; the display device is fixedly connected with the capacitive whiteboard writing apparatus, or alternatively, the display device and the capacitive whiteboard writing apparatus are arranged to separate from each other; the display device is operable to display the recognized digital-coordinate writing.

Preferably, the display device and the capacitive whiteboard writing apparatus are fixedly or detachably connected; for fixed connection between the display device and the capacitive whiteboard writing apparatus, the display device is disposed on a central portion of the writing board; or alternatively, the display device is disposed on a side portion of the writing board.

Preferably, the capacitive whiteboard writing apparatus comprises a writing board and a digital-coordinate writing recognition module fixedly connected with the writing board; the writing board is arranged for writing thereon by the capacitive whiteboard writing implement and for displaying the ink trace of various colors in a real-time manner; the digital-coordinate writing recognition module comprises a processing module and an electrical capacitive signal sampling module in electrical connection with the processing module; the electrical capacitive signal sampling module is operable to sample digital-coordinate writing corresponding to the ink trace put down on the writing board and to sample, in a real-time manner, a moving trace of the intelligent board eraser; the electrical capacitive signal sampling module adopts capacity recognition technology to sample the digital-coordinate writing of the capacitive whiteboard writing implement and the moving trace of the intelligent board eraser; the processing module is operable to carry out recognition processing on the digital-coordinate writing sampled by the electrical capacitive signal sampling module for displaying on the display device and to carry out recognition processing on the moving trace of the intelligent board eraser sampled by the electrical capacitive signal sampling module for subsequently erasing a portion of the digital-coordinate writing corresponding to the moving trace.

Preferably, the writing board comprises a frame, and the frame is fixedly connected with the board body; the electrical capacitive signal sampling module is disposed on one surface of the board body; the processing module is disposed on the frame or disposed on one surface of the board body; an opposite surface of the board body is a writing surface, and the electrical capacitive signal sampling module and the processing module are both disposed on a surface opposite to the writing surface; the digital-coordinate writing recognition module further comprises a storage module, a communication module, and a power supply module; the storage module and the communication module are in electrical connection with the processing module; the communication module is further in communication connection with the control device.

Implementation of a technical solution of the above technical solutions of the present invention provides the following advantages of efficacy effects:

The present invention provides an arrangement of a capacitive whiteboard writing implement, a capacitive whiteboard writing apparatus, and an intelligent board eraser, which fulfills real-time displaying of an ink trace put down on the capacitive whiteboard writing apparatus and also realize recognition of digital-coordinate writing put down on the capacitive whiteboard writing apparatus, and to store or display the digital-coordinate writing so recognized. On the other hand, the ink trace and/or the digital-coordinate writing put down on the capacitive whiteboard writing apparatus can be erased with the intelligent board eraser. Thus, the system possesses functions of digital-coordinate writing recognition, digital-coordinate writing displaying, digital-coordinate writing erasing, and ink trace erasing. The present invention provides full functionality, shows excellent utilization and good users' experience, and has a relatively wide market and value of application.

### BRIEF DESCRIPTION OF THE DRAWINGS

To more clearly expound the technical solution of embodiment of the present invention, a brief description will be provided below for the drawings that are necessary for the illustration of the embodiments. It is appreciated that the drawings described below show only some of the embodiments of the present invention, and those having ordinary skill in the art may envisage other drawings based on the attached drawings, without creative endeavor. In the drawings:
FIG. 1 is a schematic structure diagram showing a capacitive whiteboard writing system according to an embodiment of the present invention;
FIG. 2 is a schematic structure diagrams showing entirety of a capacitive whiteboard writing system according to an embodiment of the present invention;
FIG. 3 is a schematic structure diagrams showing entirety of a capacitive whiteboard writing implement according to an embodiment of the present invention;
FIG. 4 is a schematic structure diagram showing, in an exploded form, entirety of a capacitive whiteboard writing implement according to an embodiment of the present invention;
FIG. 5 is a schematic structure diagram showing a capacitive whiteboard writing apparatus according to an embodiment of the present invention;
FIG. 6 is a schematic structure diagram showing a digital-coordinate writing recognition module of a capacitive whiteboard writing apparatus according to an embodiment of the present invention;
FIG. 7 is a first schematic structure diagram showing an intelligent board eraser according to an embodiment of the present invention;
FIG. 8 is a second schematic structure diagram showing an intelligent board eraser according to an embodiment of the present invention;
FIG. 9 is a schematic structure diagram showing a display device disposed on a central portion of a writing board according to an embodiment of the present invention;
FIG. 10 is a schematic structure diagram showing a display device disposed on one side of a writing board according to an embodiment of the present invention; and
FIG. 11 is a schematic structure diagram showing a display device disposed on another side of a writing board according to an embodiment of the present invention.

In the drawings: 1, capacitive whiteboard writing implement; 10, electrically-conducting writing-implement housing; 11, writing-implement core; 2, capacitive whiteboard writing apparatus; 20, writing board; 200, frame; 201, board body; 21, digital-coordinate writing recognition module; 210, processing module; 211, electrical capacitive signal sampling module; 212, storage module; 213, communication module; 214, power supply module; 3, intelligent board eraser; 30, eraser housing; 31, erasing block; 4, control device; 5, display device.

### DETAILED DESCRIPTION OF PREFERRED EMBODIMENTS OF THE INVENTION

To better expound the objectives, the technical solution, and the advantages of the application, description of various illustrative embodiments will be provided below, with reference to corresponding drawings. The drawings form a part of the illustrative embodiments and provide illustration for various illustrative embodiments that are adopted to realize the present invention. Unless otherwise indicated, identical figures used through the various drawings designate the same or similar elements. The ways of implementation described with the following illustrative embodiments do not represent all the embodiments that are consistent with the disclosure. It is noted that they are only provided as examples that illustrate processes, methods, and devices in accord with some of the aspects defined, in detail, in the appended claims and disclosed in the present invention, and other feasible embodiments may also be available, and modifications with respect to the structures and functions involved in the embodiments listed in the disclosure may be made without departing from the scope and essence of the present invention.

In the description of the present invention, it is noted that terms, such as "central", "longitudinal", and "transverse", are used to indicate directional or positional relationships interpreted on the basis of the illustrations of the drawings and are applied to ease the description of the present invention and to simplify the illustration thereof, and are not intended to indicate or imply a designated element must be of a specific direction, or must be structured and operated in a specific direction. Terms, such as "first" and "second", are adopted only for the purposes of description and should not be interpreted as indicating or implying relative importance or implicitly suggesting the quantity of a technical feature indicated thereby. Terms, such as "plurality", bear meaning of having a quantity of two or more than two. Terms, such as "interconnect" and "connect", should be interpreted in a broad sense, such as being fixedly connected, detachably connected, integrally connected, mechanically connected, electrically connected, in communication connection, directly connected, and indirectly connected through an intermediate medium, and may be regarded as communication between interiors of two elements or an interacting relationship of two elements. Terms, such as "and/or", include any and all combinations of one or multiple ones of listed items. For those having ordinary skill in the field, the specific meaning of the above named terms can be appreciated from the context of the present invention based on specific situations.

To explain the technical solution provided in the present invention, in the following, description is made with respect to specific embodiments, yet only the parts that are associated with the implementation of the present invention are illustrated.

### EMBODIMENT 1

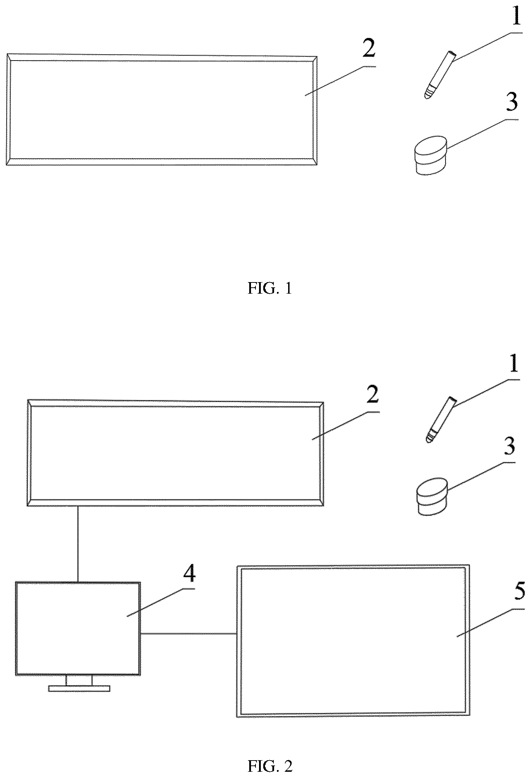

As shown in FIGS. 1-2, the present invention provides an embodiment of a capacitive whiteboard writing system, which comprises an electrically-conducting capacitive whiteboard writing implement 1, a capacitive whiteboard writing apparatus 2, and an electrically-conducting intelligent board eraser 3. The capacitive whiteboard writing implement 1, when applied to make writing on the capacitive whiteboard writing apparatus 2, is operable to put down ink traces of various colors; the capacitive whiteboard writing apparatus 2 is operable to display, in real time, the ink traces of various colors put down by means of the capacitive whiteboard writing implement 1 and to carry out recognizing, processing, displaying, and/or storing of digital-coordinate writing corresponding to the ink traces; and the intelligent board eraser 3 is used to carry out erasing of the ink traces of various colors put down on the capacitive whiteboard writing apparatus 2, when put in contact with and moving on the capacitive whiteboard writing apparatus 2, and to enable the capacitive whiteboard apparatus to recognize the digital-coordinate writing and to simultaneously carry out erasing of the digital-coordinate writing.

In the instant embodiment, the capacitive whiteboard writing system further comprises a display device 5 and a control device 4; the control device 4 is in communication connection with the capacitive whiteboard writing apparatus 2 and the display device 5; the communication connection can be wired communication connection and/or wireless communication connection. The display device 5 is fixedly connected with the capacitive whiteboard writing apparatus 2, or alternatively, the display device 5 and the capacitive whiteboard writing apparatus 2 are arranged to separate from each other; the display device 5 is used to display the recognized digital-coordinate writing. It is noted that the display device 5 can be an electrically capacitive touch display screen.

It is commonly known that a human body is an electrically conducting body that carries electrical charges, and when a person holds the electrically-conducting capacitive whiteboard writing implement 1 with a hand to make writing on the capacitive whiteboard writing apparatus 2, digital-coordinate writing is displayed and shown. The digital-coordinate writing can be displayed, in a real-time manner, on the capacitive whiteboard writing apparatus 2. In case that a writing liquid (such as an ink, or an ink that is added with an electrical conduction agent) is filled in the capacitive whiteboard writing implement 1, an ink trace (which is a trace of the writing liquid left on a surface of the capacitive whiteboard writing apparatus by a core of the writing implement). Further, the capacitive whiteboard writing apparatus 2 may recognize and process the digital-coordinate writing, and may further carry out storing by means of the control device (see description below) or make displaying on the display device (see description below) by means of the control device. Further, an existing ordinary board eraser may be effective in erasing the ink trace, yet the digital-coordinate writing cannot be simultaneously erased off, and therefore in the instant embodiment, the intelligent board eraser 3 is made electrically conducting and through the capacitive whiteboard writing apparatus 2, the purpose of erasing the digital-coordinate writing can be achieved with the intelligent board eraser 3 (see description below). As such, the system enables writing in combination with real-time displaying of an ink trace, or enables writing and real-time displaying of digital-coordinate writing only (where the capacitive whiteboard writing implement is not filled with ink), while storing and/or displaying the digital-coordinate writing that is recognized and processed on the display device, and to erase, the digital-coordinate writing and/or the ink trace so put down are erased by means of the intelligent board eraser 3. Certainly, the ink trace shows different colors by using inks of different colors, and the digital-coordinate writing may be provided with different colors by using software systems.

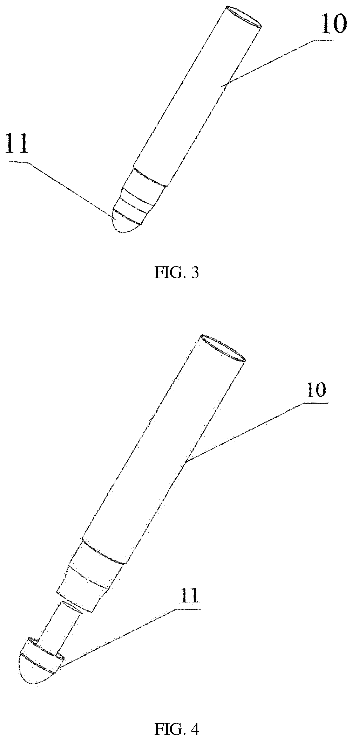

As shown in FIGS. 3-4, the capacitive whiteboard writing implement 1 comprises an electrically-conducting writing-implement housing 10, a writing-implement core 11, and electrically-conducting writing liquid. Specifically, the writing-implement core 11 is fit into one end of the electrically-conducting writing-implement housing 10, and the writing liquid is stored (filled) in a space formed by the electrically-conducting writing-implement housing 10 and the writing-implement core 11. The electrically-conducting writing-implement housing 10 and the writing-implement core 11 are in electrical connection with each other by means of the writing liquid so as to form an integral electrically conductive body. A length of the writing-implement core 11 is smaller than a length of the electrically-conducting writing-implement housing 10, and the writing liquid does not necessarily fill up the entirety of the electrically-conducting writing-implement housing 10 in order to lower the cost of the capacitive whiteboard writing implement 1. Further, the writing liquid can be stored, by means of other forms of storage, in the electrically-conducting writing-implement housing 10, and no specific limitation is made herein. Further, since the electrically-conducting writing-implement housing 10, the writing liquid, and the writing-implement core 11 are made as a combined, one-piece electrically conductive body, the writing liquid penetrates into the writing-implement core 11, and a person, when holding the electrically-conducting writing-implement housing 10 with a hand and putting the writing-implement core 11 in contact with the capacitive whiteboard writing apparatus 2, may make writing on the capacitive whiteboard writing apparatus 2. Further, hand holding the electrically-conducting writing-implement housing 10 to put the writing-implement core 11 in contact with the capacitive whiteboard writing apparatus 2 (or other displaying devices and the display device 5) may further operate the capacitive whiteboard writing apparatus 2 (or the other displaying devices and the display device 5) to realize the purpose of writing and operating of the capacitive whiteboard writing apparatus 2(or the other displaying devices and the display device 5) at the same time. It is noted here that the electrically-conducting writing-implement housing 10 can be a housing of an ordinary whiteboard pen subjected to processing of electrification, such as being replaced with an electrically conductive metal casing or being subjected to spray-coating or electroplating with an electrically conductive material to exhibit an electrical conduction property. The writing-implement core can be either an electrically conductive material or a non-electrically-conductive material, and no specific limit is made herein for the writing-implement core. Thus, the capacitive whiteboard writing implement 1 of the instant embodiment is made by adding a function of electrical conduction on the basis of a whiteboard pen to thereby realize functionality of both whiteboard pen and capacitive writing implement.

Further, the way of fitting the writing-implement core 11 to one end of the electrically-conducting writing-implement housing 10 is close fitting or insertion. For close fitting, the electrically-conducting writing-implement housing 10 and the writing-implement core 11 are not detachable, and consequently, the capacitive whiteboard writing implement 1 is disposable, and for insertion, the electrically-conducting writing-implement housing 10 and the writing-implement core 11 are detachable and the electrically-conducting writing-implement housing 10 or the writing-implement core llof the capacitive whiteboard writing implement 1 can be replaced. To enhance the electrical conduction property of the capacitive whiteboard writing implement 1, the following solution is adopted: making an inside surface of the electrically-conducting writing-implement housing 10, a portion of the electrically-conducting writing-implement housing 10 that is in contact engagement with the writing-implement core 11, and an outside surface of the electrically-conducting writing-implement housing 10 all covered with an electrically conductive material (such as coating of electrically conductive oil through spraying); forming screen printing or labeling that is electrically conductive on an outside surface of the electrically-conducting writing-implement housing 10; or further, adding an electrical conduction agent in the writing liquid. The above ways are effective in enhancing the electrical conduction property of the capacitive whiteboard writing implement 1, and can consequently realize bettering of performance of writing, performance of recognition of digital-coordinate writing, and performance of touch screen controlling. Further, other measures of electrical conduction that allows electrical charges carried on a human body to be transmitted through a capacitive whiteboard writing implement to the capacitive whiteboard writing apparatus are considered within the scope of protection of the present invention, and no detailed limitations will be made herein.

In the instant embodiment, the electrically-conducting writing-implement housing 10 comprises an electrically conductive metal or alloy, or a piece of plastics that is made electrically conductive, and metals, alloys, plastics that are currently known to be electrically conductive can be used to serve as the electrically-conducting writing-implement housing 10 of the instant embodiment; or alternatively, the electrically-conducting writing-implement housing 10 may comprise a non-electrically-conductive material. When the electrically-conducting writing-implement housing 10 is a non-electrically-conductive material, it is necessary to make the entirety of the writing implement exhibiting an electrical conduction property, and as such, it is necessary to make an inside surface of the electrically-conducting writing-implement housing 10, a portion of the electrically-conducting writing-implement housing 10 that is in contact engagement with the writing-implement core 11, and an outside surface of the electrically-conducting writing-implement housing 10 (the covering being made with measures of electroplating or spray-coating), and further making the inside and outside surfaces of the electrically-conducting writing-implement housing 10 electrically connected to form a combined, one-piece electrically conductive body, to thereby fulfill an effect of electrical conduction for the entirety of the electrically-conducting writing-implement housing. It is certain that materials that are known in the existing technology for electroplating can be used as the electrically conductive material of the instant embodiment.

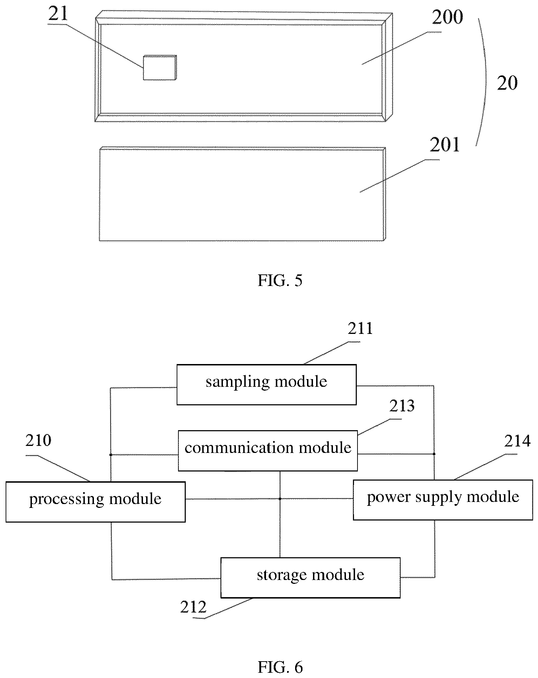

As shown in FIGS. 5-6, the capacitive whiteboard writing apparatus 2 comprises a writing board 20 and a digital-coordinate writing recognition module 21 fixedly connected with the writing board 20. The digital-coordinate writing recognition module 21 comprises a processing module 210 and an electrical capacitive signal sampling module 211 in electrical connection with the processing module 210, wherein the processing module 210 also includes a capacitive sensor (not shown in the drawings) that recognizes a moving trace of the intelligent board eraser 3 (which indicates information of movement of the intelligent board eraser 3 on the capacitive whiteboard writing apparatus 2). Specifically, the processing module 210 and the electrical capacitive signal sampling module 211 are both fixedly connected with the writing board 20. The writing board 20 is arranged for the capacitive whiteboard writing implement to make writing thereon and for exhibiting, in real time, the ink traces of various colors. As being controlled by the processing module 210, the electrical capacitive signal sampling module 211 is operable to sample digital-coordinate writing corresponding to the ink trace put down on the writing board 20, and to sample, in real time, a moving trace of the intelligent board eraser 3. The digital-coordinate writing and the moving trace that are so sampled are transmitted to the processing module 210, and the processing module 210, after carrying out recognition, makes displaying of the digital-coordinate writing on the display device 5 (and, in case that the capacitive whiteboard writing implement is not provided with ink, through an arrangement of the system, a digital-coordinate trace is also displayable on the capacitive whiteboard writing apparatus 2), and to carry out recognition of the moving trace of the intelligent board eraser 3 for subsequently erasing portions of the digital-coordinate writing and the moving trace corresponding thereto. Further, the digital-coordinate writing so sampled can be directly transmitted by means of a communication module, which will be described hereinafter, to the display device 5, or can be stored by means of a storage module, which will be described hereinafter. In this way, through the sampling operation with the electrical capacitive signal sampling module 211 and the processing operation with the processing module 210, the purpose of recognizing the digital-coordinate writing put down on the capacitive whiteboard writing apparatus 2 is fulfilled. Thus, the capacitive whiteboard writing apparatus 2 of the instant embodiment may directly display the digital-coordinate writing, or stores it with the storage module or displays it, through the communication module, on the display device 5. It is noted here that the electrical capacitive signal sampling module 211 adopts a capacitive recognition technique to recognize the digital-coordinate writing, such as a capacitive film of metal griding technology, wherein the capacitive film is attached to one surface of the writing board 20. Further, the writing board 20 comprises a frame 200, and a board body 201 fixedly connected with the frame 200. The electrical capacitive signal sampling module 211 is arranged on one surface of the board body 201. The processing module 210 is fixedly connected with the frame 200 or is disposed on one surface of the board body 201, while the opposite surface of the board body 201 serves as a writing surface. The electrical capacitive signal sampling module 211 and the processing module 210 are both arranged on the surface that is opposite to the writing surface. In the above, the way of fixed connection includes, but not limited to, adhesive attachment or bolt fastening. In the instant embodiment, the board body 201 may comprise a piece of tempered glass, and a white backing is provided on the surface of the tempered glass, the white backing being arranged on two sides of the tempered glass, or just one of them, and the white backing may comprise a paint. The tempered glass is easy to combine with the capacitive film discussed above and has a robust structure and does not easily hurt people when broken, and the white backing provides a better effect of displaying and aesthetics.

Further, the digital-coordinate writing recognition module 21 further comprises a storage module 212 and a communication module 213, both being in communication connection with the processing module 210. Specifically, the storage module 212 functions to store and keep the digital-coordinate writing, and as being controlled by the processing module 210, the communication module 213 transmits the digital-coordinate writing stored and kept in the storage module 212 to the control device 4, and the control device 4 is set in connection with display device 5 through a network or networking line, and finally, the digital-coordinate writing can be displayed on the display device 5, or under the control of the processing module 210, the communication module 213 transmits the digital-coordinate writing directly to the control device 4 to be finally displayed on the display device 5. Further, the digital-coordinate writing recognition module 21 further comprises a power supply module 214 that is in electrical connection with the processing module 210, the electrical capacitive signal sampling module 211, the storage module 212, and the communication module 213. The power supply module 214 functions to supply electrical power to the processing module 210, the electrical capacitive signal sampling module 211, the storage module 212, the communication module 213, and the display device 5. Certainly, the power supply module 214 can be a USB (Universal Serial Bus) power supply device.

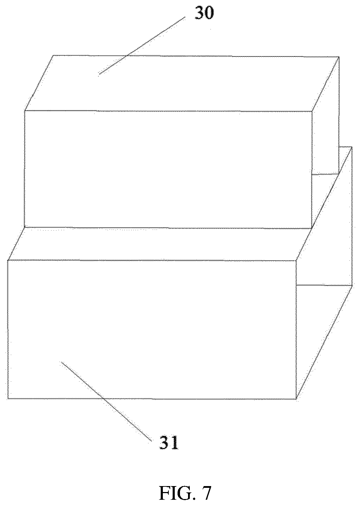

As shown in FIGS. 7-8, the intelligent board eraser 3 comprises an eraser housing 30 and an erasing block 31 that has at least a portion disposed in the eraser housing 30. Specifically, the eraser housing 30 is of a chamber configuration having one side open (the chamber being configured for receiving a portion of the erasing block), having a shape either corresponding to the erasing block 31 or not corresponding to the erasing block 31, provided it is good for hand holding of the board eraser. In the instant embodiment, the erasing block 31 is preferably of a cylindrical structure having a wiping face that is circular in shape. The eraser housing 30 is in electrical connection with the erasing block 31, and the eraser housing 30 and the erasing block 31 are both electrically conducting bodies. With the erasing block 31 positionable on and contacting the capacitive whiteboard, moving the eraser housing 30 erases the ink trace put down on the capacitive whiteboard and also erases the digital-coordinate writing put down on the capacitive whiteboard. It is known that when writing is made on the capacitive whiteboard, it can be made with an ink trace, and may also be made, at the same time, with digital-coordinate writing that is consistent with the ink trace (with respect to size and shape, and so on). Erasing of the ink trace is different from that of the digital-coordinate writing, and erasing the digital-coordinate writing requires the eraser to be a conductive body. Thus, in the instant embodiment, the erasing block 31 comprises abrasion/wear-durable electrically-conducting sponge, abrasion/wear-durable electrically-conducting fabric, or abrasion/wear-durable electrically-conducting cotton. The processing module 210 includes a capacitive sensor (not shown in the drawings) arranged in the interior thereof, and the capacitive sensor may recognize the moving trace of the board eraser. The processing module 210 is operable to receive the moving trace recognized by the capacitive sensor and to erase digital-coordinate writing that is covered by the erasing block 31 according to the moving trace. Consequently, the function of erasing the digital-coordinate writing is fulfilled. Further, the erasing block 31 is closely connected with the eraser housing 30 by means of adhesive attaching or wire line connecting. The eraser housing 30 is provided on an outside surface thereof with electrically conducting screen printing or electrically conducting labeling to ensure that there is no non-electrically-conductive part existing when a person holds the eraser housing 30 with a hand so as to guarantee sufficient electrically conducting engagement to fulfill erasing of the digital-coordinate writing with the person's hand by means of the continuous contact engagement of the erasing block 31 with the capacitive whiteboard writing apparatus.

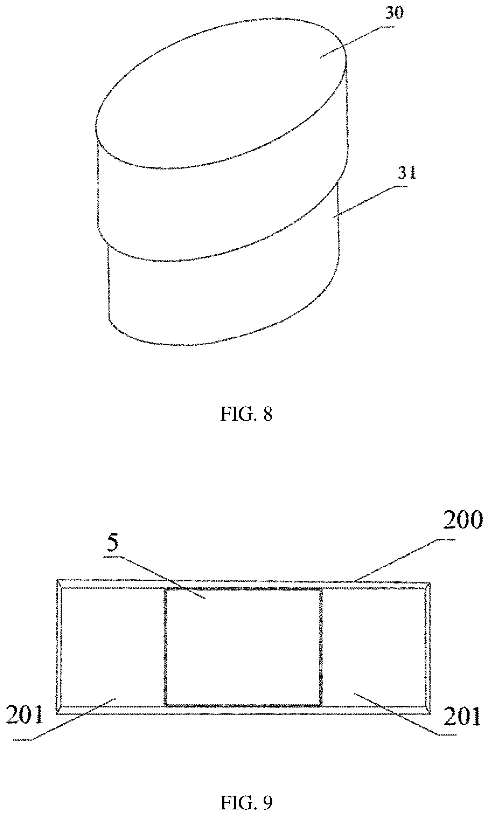

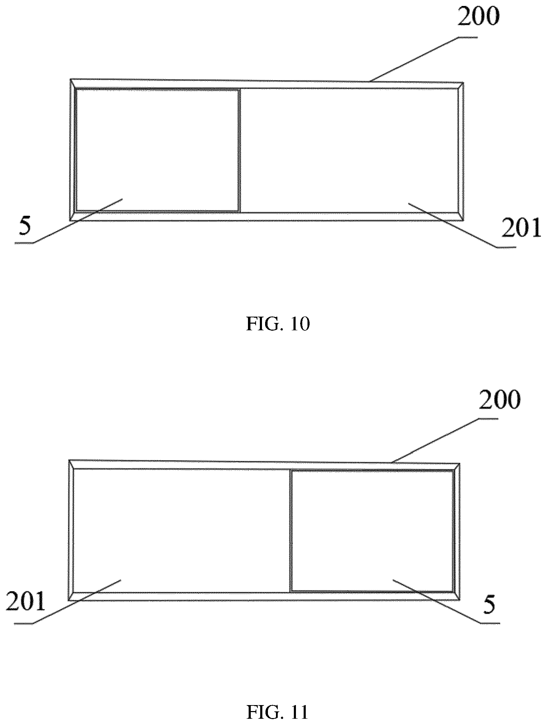

As shown in FIGS. 9-11, the display device 5 and the capacitive whiteboard writing apparatus 2 are fixedly connected, and under this condition, the display device 5 can be disposed on a central portion of the writing board 20; or alternatively, the display device 5 can be disposed on a side portion of the writing board 20. The display device 5 and the frame 200 of the capacitive whiteboard writing apparatus 2 are fixedly connected, and this may include, but not limited to, snap fitting and bolt fastening.

In summary, the instant embodiment provides an arrangement of a capacitive whiteboard writing implement, a capacitive whiteboard writing apparatus, a display device, a control device, and an intelligent board eraser, so as to achieve real-time displaying of an ink trace put down on the capacitive whiteboard writing apparatus and also to recognize digital-coordinate writing put down on the capacitive whiteboard writing apparatus, and to store or display the digital-coordinate writing so recognized, and also to allow the capacitive whiteboard writing implement to operate a touch screen; and, on the other hand, to allow the intelligent board eraser to erase the ink trace and/or the digital-coordinate writing put down on the capacitive whiteboard writing apparatus. Thus, the system possesses functions of digital-coordinate writing recognition, digital-coordinate writing displaying, digital-coordinate writing erasing, ink trace erasing, and touch screen operating, and avoids the deficiency in association with function monotonousness and users' experience being poor.

### EMBODIMENT 2

As shown in FIGS. 3-4, a capacitive whiteboard writing implement comprises an electrically-conducting writing-implement housing 10, a writing-implement core 11, and electrically-conducting writing liquid. Specifically, the writing-implement core 11 is fit into one end of the electrically-conducting writing-implement housing 10, and the writing liquid is stored (filled) in a space formed by the electrically-conducting writing-implement housing 10 and the writing-implement core 11. The electrically-conducting writing-implement housing 10 and the writing-implement core 11 are in electrical engagement with each other by means of the writing liquid so as to form a combined, one-piece electrically conductive body. A length of the writing-implement core 11 is smaller than a length of the electrically-conducting writing-implement housing 10, and the writing liquid does not necessarily fill up the entirety of the electrically-conducting writing-implement housing 10 in order to lower the cost of the capacitive whiteboard writing implement. Further, the writing liquid can be stored, by means of other forms of storage, in the electrically-conducting writing-implement housing 10, and no specific limitation is made herein.

Further, since the electrically-conducting writing-implement housing 10, the writing liquid, and the writing-implement core 11 are made as a combined, one-piece electrically conductive body, the writing liquid penetrates into the writing-implement core 11, and writing can be made on the capacitive whiteboard writing apparatus 2 by means of the writing-implement core, and a person may hold the electrically-conducting writing-implement housing 10 with a hand to set the writing-implement core 11 in contact with the capacitive whiteboard writing apparatus 2 in order to make writing on the capacitive whiteboard writing apparatus 2, and an ink trace (which is a trace of the writing liquid left on a surface of the capacitive whiteboard writing apparatus 2 by the writing- implement core 11) so written can be directly displayed, in a real-time manner, on the capacitive whiteboard writing apparatus 2, and digital-coordinate writing corresponding to the ink trace can be recognized, processed, displayed, and/or stored by the capacitive whiteboard writing apparatus 2.

Specifically, the digital-coordinate writing so written can be recognized by means of the capacitive whiteboard writing apparatus 2, and information of the recognized digital-coordinate writing can be either stored in a terminal or not stored and otherwise directly displayed by other displaying device (such as a touch screen) after being recognized by the capacitive whiteboard writing apparatus 2. Further, manually handling the electrically-conducting writing-implement housing 10 to place the writing-implement core 11 in contact with the capacitive whiteboard writing apparatus 2 can also operate the capacitive whiteboard writing apparatus 2 so as to fulfill both writing on and operating the capacitive whiteboard writing apparatus 2. It is noted here that the electrically-conducting writing-implement housing 10 can be a housing of an ordinary whiteboard pen subjected to processing of electrification, such as being replaced with an electrically conductive metal casing or being subjected to spray-coating or electroplating with an electrically conductive material to exhibit an electrical conduction property; and the writing-implement core can be either an electrically conductive material or a non-electrically-conductive material, and no specific limit is made herein for the writing-implement core. Further, a human body is an electrically conducting body that carries electrical charges, and a hand of a human body carrying electrical charges makes contact with the electrically-conducting capacitive whiteboard writing implement by means of the electrically-conducting writing-implement housing and the writing liquid to fulfill the purpose of writing on the capacitive whiteboard writing apparatus 2, and the principle that the capacitive whiteboard writing implement contacts and operates the capacitive whiteboard writing apparatus 2 is similar. As such, the capacitive whiteboard writing implement of the present invention is made by adding a function of electrical conduction on the basis of a whiteboard pen to thereby realize functionality of both whiteboard pen and capacitive writing implement, and the whiteboard pen contains therein writing liquid that is electrically conducting so that the pen itself is electrically conducting to thereby realize functionality of a whiteboard pen and a capacitive writing implement, such as operating a capacitive touch screen.

Further, the way of fitting the writing-implement core 11 to one end of the electrically-conducting writing-implement housing 10 is close fitting or insertion. For close fitting, the electrically-conducting writing-implement housing 10 and the writing-implement core 11 are not detachable, and consequently, the capacitive whiteboard writing implement is disposable, and for insertion, the electrically-conducting writing-implement housing 10 and the writing-implement core 11 are detachable and the electrically-conducting writing-implement housing 10 or the writing-implement core 11 of the capacitive whiteboard writing implement can be replaced. To enhance the electrical conduction property of the capacitive whiteboard writing implement, the following solution is adopted: making an inside surface of the electrically-conducting writing-implement housing 10, a portion of the electrically-conducting writing-implement housing 10 that is in contact engagement with the writing-implement core 11, and an outside surface of the electrically-conducting writing-implement housing 10 all covered with an electrically conductive material (such as electrically conductive oil); forming screen printing or labeling that is electrically conductive on an outside surface of the electrically-conducting writing-implement housing 10; or further, adding an electrical conduction agent in the writing liquid. The above ways are effective in enhancing the electrical conduction property of the capacitive whiteboard writing implement, and can consequently realize bettering of performance of writing, performance of recognition of digital-coordinate writing, and performance of touch screen controlling, and further, other measures of electrical conduction that allows electrical charges carried on a human body to be transmitted through a capacitive whiteboard writing implement to the capacitive whiteboard writing apparatus 2 are considered within the scope of protection of the present invention, and no detailed limitations will be made herein.

In the instant embodiment, the electrically-conducting writing-implement housing 10 comprises an electrically conductive metal or alloy, or a piece of plastics that is made electrically conductive, and metals, alloys, plastics that are currently known to be electrically conductive can be used to serve as the electrically-conducting writing-implement housing 10 of the instant embodiment; or alternatively, the electrically-conducting writing-implement housing 10 may comprise a non-electrically-conductive material. When the electrically-conducting writing-implement housing 10is a non-electrically-conductive material, it is necessary to make the entirety of the writing implement exhibiting an electrical conduction property, and as such, it is necessary to make an inside surface, a portion in contact engagement with the writing-implement core 11, and an outside surface of the electrically-conducting writing-implement housing 10 all covered with an electrically conductive material, and making the inside and outside surfaces of the electrically-conducting writing-implement housing 10 electrically connected to form an electrically conducting body to thereby fulfill an effect of electrical conduction for the entirety of the electrically-conducting writing-implement housing, and the way of covering can be electroplating or spray coating. It is certain that materials that are known in the existing technology for electroplating can be used as the electrically conductive material of the instant embodiment.

### EMBODIMENT 3

As shown in FIGS. 7-8, the present invention provides an embodiment of a capacitive whiteboard eraser, which comprises an eraser housing 30 and an erasing block 31, and the eraser housing 30 and the erasing block 31 are fixedly connected. Specifically, the erasing block 31 is an electrically conducting body, and the erasing block 31 functions for erasing ink traces of various colors on the capacitive whiteboard writing apparatus 2 when put in contact with and moving on the capacitive whiteboard writing apparatus 2 and to allow the capacitive whiteboard writing apparatus 2 to recognize digital-coordinate writing to also carry out erasing of the digital-coordinate writing; the ink trace and the digital-coordinate writing are corresponding to each other. Namely, the erasing block 31 is an electrically conducting body and when the board eraser is held and moved by a hand, the capacitive whiteboard writing apparatus 2 detects a digital-coordinate signal of the movement so as to have the digital-coordinate writing that corresponds to the ink trace put down on the capacitive whiteboard erased by the capacitive whiteboard writing apparatus 2.

Specifically, the eraser housing 30 may have a shape corresponding to the erasing block 31 or not corresponding to the erasing block 31, provided it is good for hand holding of the board eraser. The erasing block 31 is preferably of a cylindrical structure having a wiping face that is circular in shape; or alternatively, the erasing block can be of a rectangular prism structure having a wiping face that is rectangular in shape; certainly, it can be of other shapes, and no specific limit is made herein. An outside surface of the eraser housing is provided with screen printing or labeling for detailing the brand or other information.

In the instant embodiment, the erasing block has a surface area that is greater than 36 square millimeters, namely the surface area of the wiping face of the erasing block is greater than 36 square millimeters, and further, the wiping face of the erasing block has a surface resistance that is less than 100000000 ohms, and preferably, the surface resistance of the wiping face of the erasing block is less than 1000000 ohms.

Using the capacitive whiteboard writing implement 1 to write on the capacitive whiteboard writing apparatus 2 make ink traces of various colors, and also digital-coordinate writing corresponding to the ink traces. Erasing of the digital-coordinate writing is different from that of the ink trace, and erasing the digital-coordinate writing requires the erasing block 31 to be an electrically conducting body. Thus, in the instant embodiment, the erasing block 31 comprises abrasion/wear-durable electrically-conducting sponge, electrically-conducting fabric, electrically-conducting fibers, or abrasion/wear-durable electrically-conducting cotton, and can of course comprise other electrically conducting bodies that are capable erasing ink traces. The capacitive whiteboard writing apparatus 2 can recognize a moving trace of the intelligent board eraser (namely information of movement of the intelligent board eraser on the capacitive whiteboard writing apparatus 2), and can process the moving trace so recognized and can erase digital-coordinate writing that is covered by the erasing block 31 according to the moving trace to thereby fulfill the function of erasing digital-coordinate writing.

The above only illustrates some of the preferred embodiments of the present invention. Artisans of the field may appreciate that various changes and equivalent substitutes can be made on the features and embodiments without departing from the spirit and scope of the present invention. Further, with the teaching of the present invention, such features and embodiments can be modified to adapt to specific situations and materials without departing the spirit and scope of the present invention. Thus, the present invention is not limited to the specific embodiments disclosed herein and all the embodiments that fall in the scope of the claims of the application should be considered belonging to the scope of protection of the present invention.

## Claims

1. A capacitive whiteboard writing system, **characterized by** comprising an electrically-conducting capacitive whiteboard writing implement, a capacitive whiteboard writing apparatus, and an electrically-conducting intelligent board eraser;
the capacitive whiteboard writing implement being operable to make writing on the capacitive whiteboard writing apparatus and to put down an ink trace of various colors;
the capacitive whiteboard writing apparatus being operable to display, in a real-time manner, the ink trace of various colors put down by the capacitive whiteboard writing implement, and to perform recognizing, processing, displaying, and/or storing of digital-coordinate writing corresponding to the ink trace;
the intelligent board eraser being operable to contact with and move on the capacitive whiteboard writing apparatus to perform erasing of the ink trace of various colors on the capacitive whiteboard writing apparatus and to allow the capacitive whiteboard apparatus to recognize the digital-coordinate writing to simultaneously erase the digital-coordinate writing.

2. The capacitive whiteboard writing system according to claim 1, **characterized in that** the capacitive whiteboard writing implement comprises an electrically-conducting writing-implement housing, a writing-implement core, and electrically-conducting writing liquid;
Wherein the writing-implement core is fit to one end of the electrically-conducting writing-implement housing; the writing liquid is stored in a space formed by the electrically-conducting writing-implement housing and the writing-implement core; the electrically-conducting writing-implement housing and the writing-implement core are electrically connected with each other through the writing liquid so as to form an integral electrically conductive body.

3. The capacitive whiteboard writing system according to claim 2, **characterized in that** an inside surface of the electrically-conducting writing-implement housing, a portion of the electrically-conducting writing-implement housing in contact engagement with the writing-implement core, and an outside surface of the electrically-conducting writing-implement housing are all covered with an electrically-conducting material;
the outside surface of the electrically-conducting writing-implement housing is provided with electrically-conducting screen printing or electrically-conducting labeling for enhancing an electrical conduction property of the electrically-conducting writing-implement housing.

4. The capacitive whiteboard writing system according to claim 2, **characterized in that** the electrically-conducting writing-implement housing comprises an electrically-conducting plastic material, metal, or alloy; or alternatively,
the electrically-conducting writing-implement housing comprises a non-electrically conductive material and has an inside surface, a portion in contact engagement with the writing-implement core, and an outside surface that are all covered with an electrically-conducting material, and the inside surface and the outside surface of the electrically-conducting writing-implement housing are in electrical connection with each other to form an integral electrically conducting body.

5. The capacitive whiteboard writing system according to claim 1, **characterized in that** the intelligent board eraser comprises an eraser housing, and an erasing block having at least a portion disposed in the eraser housing;
the eraser housing is in electrical connection with the erasing block;
the eraser housing and the erasing block are both electrically conducting bodies;
the erasing block is further in close connection with the eraser housing.

6. The capacitive whiteboard writing system according to claim 5, **characterized in that** the erasing block comprises abrasion/wear-durable electrically-conducting sponge, abrasion/wear-durable electrically-conducting fabric, or abrasion/wear-durable electrically-conducting cotton.

7. The capacitive whiteboard writing system according to claim 1, **characterized by** further comprising a display device and a control device;
the control device is in communication connection with the capacitive whiteboard writing apparatus and the display device, and the communication connection comprises wired communication connection and/or wireless communication connection;
the display device is fixedly connected with the capacitive whiteboard writing apparatus, or alternatively, the display device and the capacitive whiteboard writing apparatus are arranged to separate from each other;
the display device is operable to display the recognized digital-coordinate writing.

8. The capacitive whiteboard writing system according to claim 7, **characterized in that** the display device and the capacitive whiteboard writing apparatus are fixedly or detachably connected;
for fixed connection between the display device and the capacitive whiteboard writing apparatus, the display device is disposed on a central portion of the writing board; or alternatively,
the display device is disposed on a side portion of the writing board.

9. The capacitive whiteboard writing system according to claim 7, **characterized in that** the capacitive whiteboard writing apparatus comprises a writing board and a digital-coordinate writing recognition module fixedly connected with the writing board;
wherein the writing board is arranged for writing thereon by the capacitive whiteboard writing implement and for displaying the ink trace of various colors in a real-time manner;
the digital-coordinate writing recognition module comprises a processing module and an electrical capacitive signal sampling module in electrical connection with the processing module;
the electrical capacitive signal sampling module is operable to sample digital-coordinate writing corresponding to the ink trace put down on the writing board and a moving trace of the intelligent board eraser in a real-time manner;
the electrical capacitive signal sampling module adopts capacity recognition technology to sample the digital-coordinate writing of the capacitive whiteboard writing implement and the moving trace of the intelligent board eraser; and
the processing module is operable to perform recognition processing on the digital-coordinate writing sampled by the electrical capacitive signal sampling module for displaying on the display device and to perform recognition processing on the moving trace of the intelligent board eraser sampled by the electrical capacitive signal sampling module and subsequently erasing a portion of the digital-coordinate writing corresponding to the moving trace.

10. The capacitive whiteboard writing system according to claim 9, **characterized in that** the writing board comprises a frame and a board body fixedly connected with the frame;
wherein the electrical capacitive signal sampling module is disposed on a surface of the board body;
the processing module is disposed on the frame or disposed on the surface of the board body;
an opposite surface of the board body is a writing surface, and the electrical capacitive signal sampling module and the processing module are both disposed on the surface opposite to the writing surface;
the digital-coordinate writing recognition module further comprises a storage module, a communication module, and a power supply module;
the storage module and the communication module are in electrical connection with the processing module; the communication module is further in communication connection with the control device.
